# EUROPEAN PATENT APPLICATION

(11) **EP 3 291 428 A1**
(43) Date of publication of application: **07.03.2018**
(21) Application number: 17186764.1
(22) Date of filing: 18.08.2017
(51) Int. Cl.: H02K 53/00

(54) **MAGNET-ASSISTED POWER GENERATION MODULE**

(30) Priority: 31.08.2016 TW 105213382 U
(71) Applicant: Tsai, Te-Feng, Donggang Township, Pingtung County (TW)
(72) Inventor: Tsai, Te-Feng, Donggang Township, Pingtung County (TW)
(74) Representative: Casalonga

(57) **Abstract**

A magnet-assisted power generation module includes a power generation assembly (10) and a magnet-assisted driving assembly (20). The power generation assembly (10) includes a stator (11) and a rotatable rotor (12) and thus power is generated. The magnet-assisted driving assembly (20) includes a hollow outer permanent magnetic component (21) fixed on the power generation assembly (10) and an inner permanent magnetic component (22) rotatably mounted in the outer permanent magnetic component (21) connected to the rotor (12). When external forces are transmitted to the rotor (12), repulsion forces are generated between the inner permanent magnetic component (22) and the outer permanent magnetic component (21) and the repulsion forces are deflected from a center point of a shaft (121) of the rotor (12). Thus, loading of the rotor (12) is lessened so that the rotor (12) may be rotated by smaller external forces.

## Description

### 1. Field of the Invention

The present invention relates to a generator, especially to a magnet-assisted power generation module.

### 2. Description of the Prior Arts

A conventional power generation module includes a stator and a rotor. The rotor comprises a coil mounted therein. The stator comprises an annular permanent magnet and the coil of the rotor is rotatably mounted in the stator. The rotor is rotatable with respect to the stator. When the rotor is rotated in the stator by external forces, the coil of the rotor is capable of rotating between two magnetic poles of the annular permanent magnet of the stator, and thereby magnetic field in the coil is changed and thus induced current is generated.

Generally, volume and weight are increased along with the efficacy of the power generation module, and thus the external driving force should be increased as well. In other words, the larger the size of the power generation module, the larger force is needed to rotate the rotor. Therefore, how to efficiently transform the external forces to power is a big issue.

To overcome the shortcomings, the present invention provides a magnet-assisted power generation module to mitigate or obviate the aforementioned problems.

The main objective of the present invention is to provide a magnet-assisted power generation module that can be driven by smaller external forces.

The magnet-assisted power generation module has a power generation assembly and a magnet-assisted driving assembly. The power generation assembly includes a stator and a rotor. The rotor is rotatable with respect to the stator for generating power. The rotor comprises a shaft. The magnet-assisted driving assembly includes an outer permanent magnetic component and an inner permanent magnetic component. The outer permanent magnetic component is hollow and securely mounted on a side of the power generation assembly. The inner permanent magnetic component is rotatably mounted in the outer permanent magnetic component and connected to the shaft of the rotor of the power generation assembly so that the inner permanent magnetic component and the shaft rotate along with each other. The outer permanent magnetic component and the inner permanent magnetic component face to each other by the same magnetic pole and magnetic repulsion forces generated therebetween are deflected from a center point of the shaft of the rotor.

Other objectives, advantages and novel features of the invention will become more apparent from the following detailed description when taken in conjunction with the accompanying drawings.

### IN THE DRAWINGS:

Fig. 1 is a perspective view of a magnet-assisted power generation module in accordance with the present invention;
Fig. 2 is a side view of the magnet-assisted power generation module in Fig. 1;
Fig. 3 is a sectional view of the magnet-assisted power generation module across line A-A in Fig. 2; and
Fig. 4 is an operational schematic view of the magnet-assisted power generation module in Fig. 1.

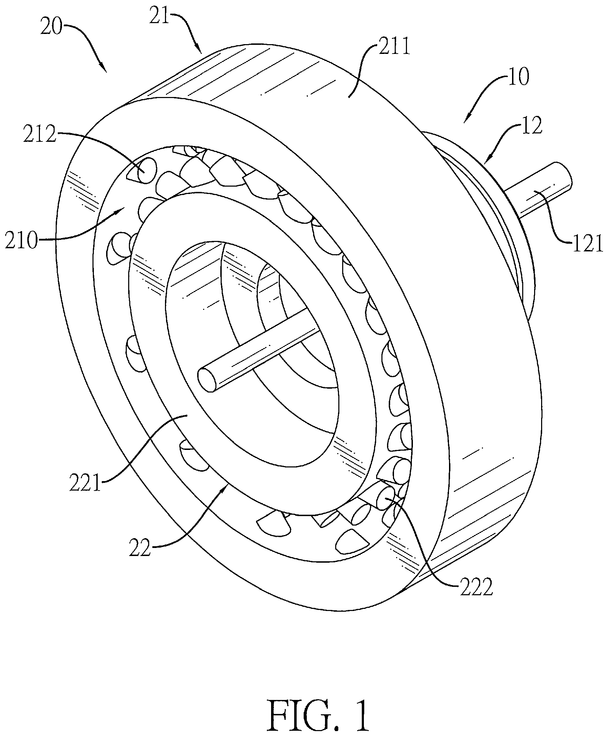

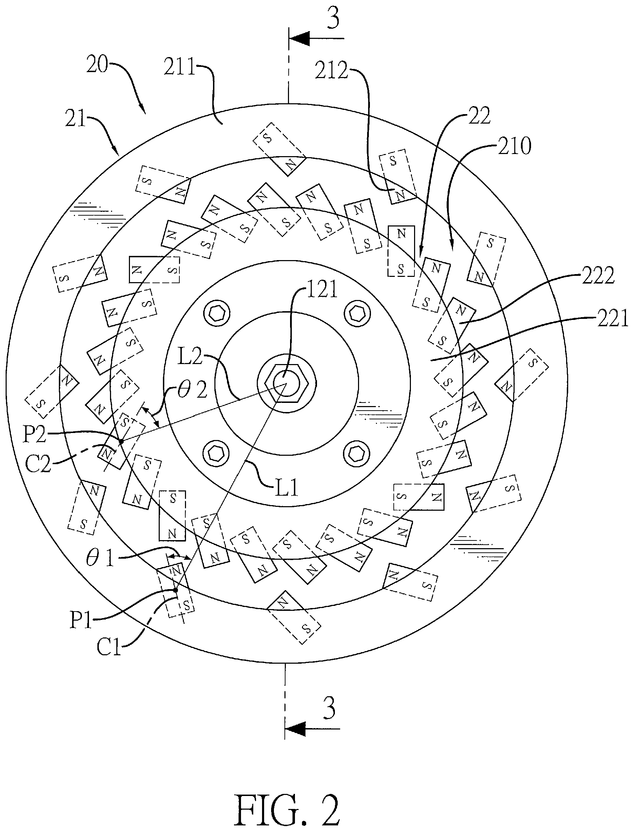

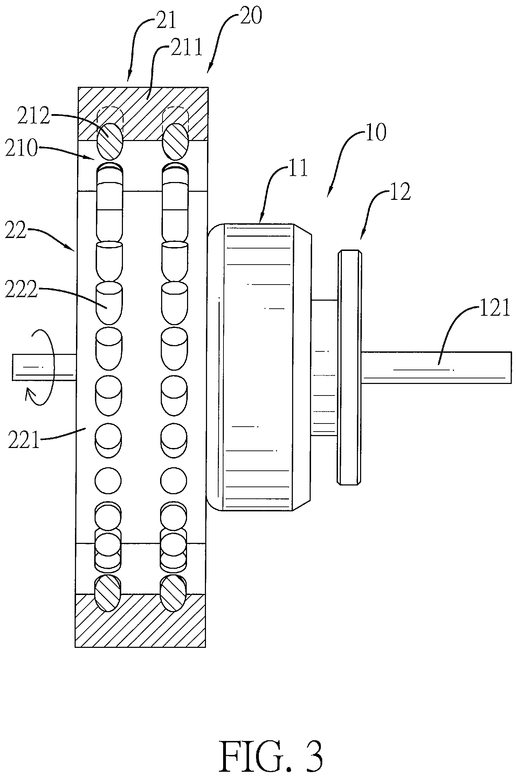

With reference to Figs. 1 to 3, a magnet-assisted power generation module in accordance with the present invention includes a power generation assembly 10 and a magnet-assisted driving assembly 20.

As shown in Figs. 1 to 3, the power generation assembly 10 includes a stator 11 and a rotor 12. The rotor 12 is rotatable with respect to the stator 11. The rotor 12 comprises a shaft 121 therein. The power generation assembly 10 is a conventional power generation assembly, e.g. the rotor comprises a coil therein and the stator comprises an annular permanent magnet. In the conventional power generation assembly, the rotor with the coil is rotatably mounted in the stator and thereby when the rotor is rotated in the stator, the coil rotating between two magnetic poles of the annular permanent magnet may change a magnetic field in the coil and thus induced current is generated.

The magnet-assisted driving assembly 20 includes an outer permanent magnetic component 21 and an inner permanent magnetic component 22. The outer permanent magnetic component 21 is hollow and is securely mounted on a side of the power generation assembly 10. The inner permanent magnetic component 22 is rotatably mounted in the outer permanent magnetic component 21. The outer permanent magnetic component 21 and the inner permanent magnetic component 22 face to each other by the same magnetic poles and thereby magnetic repulsion forces are generated therebetween. A center of the inner permanent magnetic component 22 is connected to the shaft 121 of the rotor 12 of the power generation assembly 10, which makes the rotor 12 and the inner permanent magnetic component 22 rotatable along with each other.

In the preferred embodiment, a magnetic field of the outer permanent magnetic component 21 is stronger than that of the inner permanent magnetic component 22. The outer permanent magnetic component 21 includes a base 211 and a plurality of outer permanent magnets 212. The base 211 forms a round active space 210. The outer permanent magnets 212 are mounted and distributed in the base 211. The outer permanent magnets 212 face to the active space 210 by the same magnetic poles. The inner permanent magnetic component 22 is rotatably mounted in the active space 210 of the base 211. The inner permanent magnetic component 22 includes a round rotator 221 and a plurality of inner permanent magnets 222, and the inner permanent magnets 222 are mounted and distributed on an outer peripheral surface of the rotator 221. Magnetic poles of the inner permanent magnets 222 facing outward are the same with magnetic poles of the outer permanent magnet 212 facing toward the active space 210. Magnetic repulsion forces generated by the outer permanent magnetic component 21 and the inner permanent magnetic component 22 are deflected from a center of the rotor 12. A number of the outer permanent magnets 212 mounted on a peripheral surface of the active space 210 of the base 21 is less than that of the inner permanent magnets 222 mounted on the outer peripheral surface of the rotator 22.

In this preferred embodiment, directions of the magnetic poles of the outer permanent magnets 212 mounted on the peripheral surface of the active space 210 of the base 21 extend inward and obliquely forward along a rotation direction of the rotor 12; and directions of the magnetic poles of the inner permanent magnets 222 extend outward and obliquely backward along the rotation direction of the rotor 12. Each one of the outer permanent magnets 212 defines a center line C1 and a midpoint P1 on a center of the center line C1 of said outer permanent magnet. An angle θ1 between the center line C1 of each one of the outer permanent magnets 212 and a line along a center point of the shaft 121 to the midpoint P1 of the center line C1 of said outer permanent magnet 212 is from 30 to 60 degrees. Each one of the inner permanent magnets 222 defines a center line C2 and a midpoint P2 on a center of the center line C2 of said inner permanent magnet 222. An angle θ2 between the center line C2 of each one of the inner permanent magnets 222 and a line along a center point of the shaft 121 to the midpoint P2 of the center line C2 of said inner permanent magnet 222 is from 30 to 60 degrees. The preferred angle θ1 and/or θ2 is 45 degrees.

When utilized, the magnet-assisted power generation module of the present invention is connected to a driving device directly or indirectly through the shaft 121 of the rotor 12 of the power generation assembly 10. The driving device may be a wind type or a hydraulic type driving device, or any type of the conventional driving device. In this embodiment, the magnet-assisted power generation module is connected to a wind type or a hydraulic type driving device, or any other driving device which exploits natural force. Therefore, the driving device is capable of exploiting the natural power and therefore drives the magnet-assisted power generation module of the present invention to rotate so that the magnet-assisted power generation module is environmentally friendly and saves energy.

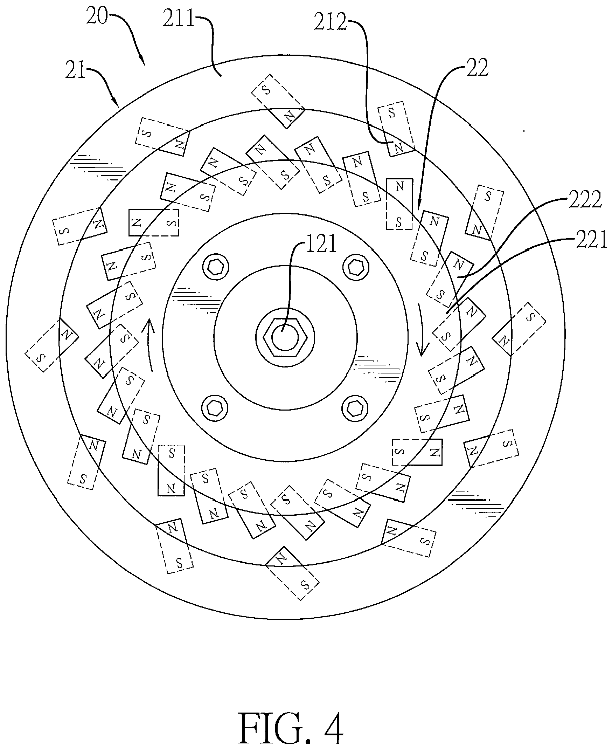

Please refer to Figs. 1, 3, and 4. With assistance of the magnetic repulsion forces between the outer permanent magnetic component 21 and the inner permanent magnetic component 22 of the magnet-assisted driving assembly 20, when an external rotating force is exerted on the rotor 12 of the power generation assembly 10, weight of the inner permanent magnetic component 22 connected to the shaft 121 of the rotor 12 is offset, loading on the shaft 121 is lessened, and auxiliary rotating forces are exerted on the rotor 12, so that a force driving the rotor 12 of the present invention to rotate is smaller than a force driving a rotor without the magnet-assisted driving assembly 20 to rotate. Especially, as the outer permanent magnets 212 and the inner permanent magnets 222 are oblique with respect to the forward rotation direction of the rotor 12, the magnetic repulsion forces between the outer permanent magnetic component 21 and the inner permanent magnetic component 22 are deflected from the shaft 121 of the rotor 12, which generates moments on the rotor 12, so that an external rotating force exerted on the rotor 12 of the present invention is less than an external rotating force exerted on a rotor without the magnet-assisted driving assembly 20. Therefore, with assistance of the magnetic repulsion forces of the magnet-assisted driving assembly 20 of the magnet-assisted power generation module of the present invention, the rotor 12 can be rotated and generate power by smaller forces.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A magnet-assisted power generation module **characterized in that** the magnet-assisted power generation module comprising:
a power generation assembly (10) including:
a stator (11); and
a rotor (12) being rotatable with respect to the stator (11) for generating power, the rotor (12) comprising:
a shaft (121); and
a magnet-assisted driving assembly (20) including:
an outer permanent magnetic component (21) being hollow and securely mounted on a side of the power generation assembly (10); and
an inner permanent magnetic component (22) rotatably mounted in the outer permanent magnetic component (21), and connected to the shaft (121) of the rotor (12) of the power generation assembly (10) so that the inner permanent magnetic component (22) and the shaft (121) rotate along with each other;
wherein the outer permanent magnetic component (21) and the inner permanent magnetic component (22) face to each other by the same magnetic poles and magnetic repulsion forces generated therebetween are deflected from a center point of the shaft (121) of the rotor (12).

2. The magnet-assisted power generation module as claimed in claim 1, wherein a magnetic field of the outer permanent magnetic component (21) is stronger than a magnetic field of the inner permanent magnetic component (22).

3. The magnet-assisted power generation module as claimed in claim 1 or 2, wherein:
the outer permanent magnetic component (21) includes:
a base (21) forming:
a round active space (210);
a plurality of outer permanent magnets (212) mounted in the base (21) and the outer permanent magnets (212) facing the active space (210) by the same magnetic poles; and
the inner permanent magnetic component (22) is rotatably mounted in the active space (210) and includes:
a rotator (221) being round in shape; and
a plurality of inner permanent magnets (222) mounted on an outer peripheral surface of the rotator (221) and magnetic poles of the inner permanent magnets (222) that face outward being the same with the magnetic poles of the outer permanent magnets (212) that face the active space (210).

4. The magnet-assisted power generation module as claimed in claim 3, wherein a number of the outer permanent magnets (212) mounted on a peripheral surface of the active space (210) of the base (21) is less than a number of the inner permanent magnets (222) that are mounted on the outer peripheral surface of the rotator (221).

5. The magnet-assisted power generation module as claimed in claim 3 or 4, wherein:
directions of the magnetic poles of the outer permanent magnets (212) mounted on the peripheral surface of the active space (210) of the base (21) extend inward and obliquely forward along a rotation direction of the rotor (12);
an angle (θ1) between a center line (C1) of each one of the outer permanent magnets (212) and a line along the center point of the shaft (121) to a midpoint of the center line (C1) of said outer permanent magnet (212) is from 30 to 60 degrees;
directions of the magnetic poles of the inner permanent magnets (222) extend outward and obliquely backward along the rotation direction of the rotor (12); and
an angle (θ2) between a center line (C2) of each one of the inner permanent magnets (222) and a line along the center point of the shaft (121) to a midpoint of the center line (C2) of said inner permanent magnet (222) is from 30 to 60 degrees.

6. The magnet-assisted power generation module as claimed in claim 5, wherein:
the angle (θ1) between the center line (C1) of each one of the outer permanent magnets (212) and the line along the center point of the shaft (121) to the midpoint of the center line of said outer permanent magnet (212) is 45 degrees; and
the angle (θ2) between the center line (C2) of each one of the inner permanent magnets (222) and the line along the center point of the shaft (121) to the midpoint of the center line of said inner permanent magnet (222) is 45 degrees.
